(19) Europäisches Patentamt
European Patent Office
Office européen des brevets

(11) **EP 1 106 016 B1**

(12) **FASCICULE DE BREVET EUROPEEN**

(45) Date de publication et mention
de la délivrance du brevet:
**18.08.2010 Bulletin 2010/33**

(21) Numéro de dépôt: **99936683.4**

(22) Date de dépôt: **04.08.1999**

(51) Int Cl.:
***H04N 13/04*** *(2006.01)*   ***G02B 27/22*** *(2006.01)*

(86) Numéro de dépôt international:
**PCT/FR1999/001927**

(87) Numéro de publication internationale:
**WO 2000/010332 (24.02.2000 Gazette 2000/08)**

(54) **PROCEDE D'AFFICHAGE AUTOSTEREOSCOPIQUE**

VERFAHREN ZUR DARSTELLUNG AUTOSTEREOSKOPISCHER BILDER

METHOD FOR AUTOSTEREOSCOPIC DISPLAY

(84) Etats contractants désignés:
**AT BE CH CY DE DK ES FI FR GB GR IE IT LI LU MC NL PT SE**

(30) Priorité: **13.08.1998 FR 9810384**

(43) Date de publication de la demande:
**13.06.2001 Bulletin 2001/24**

(73) Titulaire: **ALIOSCOPY**
**75020 Paris (FR)**

(72) Inventeur: **Allio, Pierre**
**75020 Paris (FR)**

(74) Mandataire: **Jacquard, Philippe Jean-Luc et al**
**Cabinet ORES**
**36, rue de St Pétersbourg**
**75008 Paris (FR)**

(56) Documents cités:
**WO-A-94/26072**

**Description**

La présente invention a pour objet un procédé d'affichage autostéréoscopique d'une image à N points de vue sur un écran comportant des points image ou pixels d'affichage disposés selon des lignes et des colonnes, chaque pixel d'affichage présentant p>1 points de couleur correspondant à une première, un deuxième, ..., une p$^{ème}$ composante de couleur, procédé dans lequel les pixels d'une image autostéréoscopique à afficher sont affichés en répartissant spatialement les p points de couleur de chaque pixel entre les points de couleur de composante de couleur homologue de p pixels d'affichage différents.

Un tel procédé est décrit dans la Demande PCT WO 94/26072 déposée au nom du Demandeur sous le titre "Dispositif et système vidéo autostéréoscopique" et publiée le 10 Novembre 1994. Selon ce procédé relatif au cas où les pixels de l'écran vidéo sont composés de p points de couleur placés côte à côte dans la direction des lignes, les p (par exemple 2 ou 3) composantes de couleur (ou points de couleur) d'un même point image ou pixel d'une image autostéréoscopique à N points de vue sont répartis entre p (par exemple 2 ou 3) pixels successifs arrangés dans la direction des lignes de l'image. Le nombre N des points de vue de l'image n'est pas un multiple de p, et le réseau lenticulaire présente un pas égal au produit du pas des points de couleur multiplié par le nombre des points de vue.

Un procédé mettant en oeuvre le même principe a été décrit dans la Demande de Brevet Européen n°EP-A-0 791 847 (PHILIPS ELECTRONICS) intitulée "Autostereoscopic display apparatus" publiée le 27 Août 1997. Selon ce procédé qui vise à répartir entre les lignes et les colonnes la perte de définition due à la multiplication des images, les pixels sont décalés d'une ligne à l'autre d'une distance égale à la moitié du pas des points de couleur composant les pixels, ce décalage étant en l'occurrence obtenu optiquement en inclinant les lenticules du réseau de visualisation par rapport à la direction des colonnes des pixels d'affichage de l'écran.

Les procédés décrits dans les documents mentionnés ci-dessus ne permettent pas de compenser au moins partiellement la perte de définition due à la présence de N points de vue.

La présente invention a pour objet un procédé d'affichage permettant de remédier au moins partiellement au problème précité.

L'invention concerne ainsi un procédé d'affichage autostéréoscopique d'une image à N points de vue sur un écran comportant des pixels d'affichage disposés selon des lignes et des colonnes, chaque pixel d'affichage présentant p>1 points de couleur, correspondant à une première, deuxième, ..., une p$^{ème}$ composante de couleur, procédé dans lequel les pixels d'une image autostéréoscopique à afficher sont affichés en répartissant spatialement les p points de couleur de chaque pixel entre les points de couleur de composante de couleur homologue de p pixels d'affichage différents, tel que défini dans la revendication 1.

La répartition entre les p points de couleur d'un pixel de l'image à afficher est alors réalisée à partir de p pixels différents de l'image autostéréoscopique de définition supérieure, alors que dans l'art antérieur précité cette répartition était effectuée à partir de p points de couleur provenant d'un même point image ou pixel.

L'image autostéréoscopique à afficher peut être générée à partir de l'image de définition supérieure en amont de l'écran dans une mémoire ou sur tout support d'enregistrement, ou bien directement par adressage au niveau de l'écran.

De préférence, l'image autostéréoscopique de définition supérieure présente, dans la direction des lignes, autant de pixels à p points de couleur que chaque ligne d'image présente de points de couleur.

Etant donné que les p composants de couleur de chaque pixel portent de l'information provenant de p points répartis dans l'espace, l'image résultante présente une résolution qui est p fois meilleure en ce qui concerne la luminance, alors que la définition des couleurs présente quant à elle la même résolution que précédemment. Le spectateur perçoit cependant une image qui présente

subjectivement une définition améliorée de p fois en raison de la perception améliorée des contours, alors que la plus faible définition de la chrominance (effet de couleurs qui "bavent") n'est pas perçue en vision stéréoscopique.

Par exemple, pour une image présentant un segment de droite incliné, le décalage entre les composantes de couleur, par exemple rouge, vert et bleu, de pixel qui se suivent dans l'image dite définition supérieure et qui est du à ladite répartition spatiale de l'information d'origine sur des pixels d'affichage différents, est, en présence de contraste, plus perçu par le cerveau comme une différence de luminosité haute résolution que comme une variation périodique de couleur. En outre, la répartition spatiale des points de couleur a pour effet que les deux yeux, qui voient deux points de vue différents, voient en général à travers un lenticule donné des composantes de couleur différentes, ce qui induit une complémentarité d'un oeil à l'autre qui atténue la perception d'une basse résolution des composantes de couleur. L'effet subjectif global est une amélioration de la finesse de l'image et de la perception des plans (due à l'augmentation de la résolution de la disparité), pratiquement sans perception de la plus basse résolution des couleurs.

Une image autostéréoscopique présentant intrinsèquement une définition supérieure peut être obtenue à partir d'une caméra ou d'une banque d'images ou bien sous forme d'images de synthèse.

Le procédé peut être caractérisé en ce que l'image autostéréoscopique de définition supérieure est générée à partir d'une image autostéréoscopique de départ qui présente une définition plus faible que ladite définition supérieure, à l'aide d'un procédé d'augmentation de définition tel qu'un procédé par interpolation, par vectorisation ou par recherche de contour. L'image autostéréoscopique de départ peut être obtenue à partir d'une caméra ou d'une banque d'images, ou bien sous forme d'images de synthèse.

Ceci permet de bénéficier de l'amélioration de la définition des images qui peut être obtenue grâce aux procédés modernes de traitement d'images numériques. En particulier, ladite définition plus faible peut être la définition de l'écran, ce qui permet en particulier de partir d'images vidéo standard.

L'image autostéréoscopique de définition supérieure peut être générée en ne générant pour chaque pixel que le point de couleur utilisé lors de la génération de ladite image autostéréoscopique à afficher.

Le procédé d'augmentation de définition peut augmenter la définition dans le sens des lignes et/ou des colonnes.

Selon un mode de réalisation convenant à la technique d'affichage décrite dans la Demande de Brevet Européen n°EP-A-0 791 847 précitée, et permettant une augmentation de la définition à la fois dans le sens des lignes et des colonnes, le procédé peut être caractérisé en ce que l'image autostéréoscopique de définition supérieure est obtenue en générant à partir de l'image autostéréoscopique de départ, à l'aide dudit procédé d'augmentation de définition, une image autostéréoscopique intermédiaire présentant soit p, soit (p-1) plus de lignes et soit p, soit (p-1) plus de colonnes de pixels que l'écran, et en ce que ladite image autostéréoscopique de définition supérieure est obtenue en sélectionnant dans l'image autostéréoscopique intermédiaire les pixels dont la position correspond à ladite répartition spatiale.

Dans le cadre de cette technique, il reste cependant avantageux de n'augmenter la définition que dans la direction horizontale des lignes.

Il est avantageux, en particulier lorsque ladite définition plus faible est la définition de l'écran, de réaliser l'augmentation de définition en passant par la génération d'une image autostéréoscopique intermédiaire ayant une définition augmentée qui est inférieure à ladite définition supérieure, à partir de laquelle s'effectue la génération de ladite image autostéréoscopique de définition supérieure. Ceci convient en particulier au cas où p = 3 et où l'image de définition augmentée présente (p-1), c'est-à-dire 2 fois plus de pixels que l'image autostéréoscopique de départ, alors que l'image autostéréoscopique de définition supérieure présente p=3 fois plus de pixels que l'image autostéréoscopique de départ.

L'image autostéréoscopique intermédiaire et/ou celle de définition supérieure sont de préférence générées en ne calculant pour chaque pixel que le ou les point(s) de couleur utile(s), c'est-à-dire ceux qui sont utilisés pour des calculs ultérieurs et/ou pour l'affichage.

Selon une variante de l'invention permettant une augmentation de la définition à la fois dans le sens des lignes et des colonnes, le procédé est caractérisé en ce que l'image autostéréoscopique de définition supérieure est obtenue à partir d'une image autostéréoscopique de départ présentant soit p, soit (p-1) plus de lignes, et soit p, soit (p-1) plus de colonnes de pixels que l'écran, et en ce que l'image autostéréoscopique de définition supérieure est obtenue en sélectionnant dans l'image autostéréoscopique de départ, les pixels dont la position correspond à ladite répartition spatiale. Ceci appelle les mêmes remarques que précédemment.

Selon une variante particulièrement avantageuse, le procédé est caractérisé en ce que l'image autostéréoscopique à afficher comporte, lorsqu'elle est ordonnée de manière à imbriquer les pixels des N points de vue qui la composent selon la topologie de son affichage, des groupes de N pixels dont chacun correspond à un point de vue différent pour former une image imbriquée comme décrit dans la Demande PCT WO-A-94/2607 du Demandeur, le premier pixel d'un groupe donné de N pixels, qui correspond à un premier point de vue, étant constitué d'un premier point de couleur qui est le point de couleur de la première composante de couleur du premier desdits p pixels différents d'un groupe de p pixels du premier point de vue, d'un deuxième point de couleur qui est le point de couleur de la deuxième composante de couleur du deuxième desdits pixels différents dudit groupe de p pixels du premier point de vue, ... d'un p$^{\text{ème}}$ point de couleur qui est le point de couleur de la p$^{\text{ème}}$ composante de couleur du p$^{\text{ème}}$ desdits pixels différents dudit groupe de p pixels du premier point de vue, le deuxième pixel dudit groupe donné de N pixels, qui correspond à un deuxième point de vue, étant constitué d'un premier point de couleur qui est le point de couleur de la deuxième composante de couleur du premier desdits p pixels différents d'un groupe de p pixels du deuxième point de vue, ... d'un p$^{\text{ème}}$ point de couleur qui est le point de couleur de la première composante de couleur du p$^{\text{ème}}$ desdits p pixels différents du groupe de p pixels du deuxième point de vue, et ainsi de suite par permutation circulaire jusqu'au Nième pixel dudit groupe donné, qui correspond au Nième point de vue et au groupe de p pixels qui lui correspond. Lesdits groupes de N pixels sont avantageusement répétés dans le sens des lignes.

Lesdits p pixels différents peuvent être contigus.

De manière préférentielle, les p pixels différents sont alignés dans la direction des lignes.

Les p points de couleur de chaque pixel d'affichage sont avantageusement disposés côte à côte dans la direction des colonnes, ou de préférence, des lignes.

L'image autostéréoscopique à N points de vue obtenue par le procédé tel que défini ci-dessus présente des pixels disposés selon des lignes et des colonnes, chaque pixel étant constitué de p points de couleur d'une composante de couleur différente, caractérisé en ce que chacun des p points de couleur de chaque pixel est constitué par un point de couleur d'une composante de couleur homologue décalé spatialement de la même façon que chacun de p pixels différents d'un point de vue d'une image autostéréoscopique de définition supérieure présentant au moins autant de pixels à p points de couleur que l'image autostéréoscopique à N points de vue présente de points de couleur. Lesdits p pixels différents sont avantageusement contigus et ils sont de préférence alignés selon la direction des lignes. Ils peuvent être également alignés par exemple selon une diagonale de l'image autostéréoscopique de définition supérieure.

En particulier, ladite image peut être caractérisée en ce qu'elle comporte, lorsqu'elle est ordonnée de manière à imbriquer les pixels des N points de vue qui la composent selon la topologie de son affichage, des groupes de N pixels, dont chacun correspond à un point de vue différent, le premier pixel d'un groupe donné de N pixels, qui correspond à un premier point de vue étant constitué d'un premier point de couleur qui est le point de couleur de la première composante de couleur du premier desdits p pixels différents d'un groupe de p pixels différents du premier point de vue, d'un deuxième point de couleur qui est le point dé couleur de la deuxième composante de couleur du deuxième desdits pixels différents dudit groupe de p pixels différents du premier point de vue ..., d'un $p^{ème}$ point de couleur qui est le point de couleur de la $p^{ème}$ composante de couleur du $p^{ème}$ desdits pixels différents dudit groupe de p pixels du premier point de vue, le deuxième pixel dudit groupe donné de N pixels, qui correspond à un deuxième point de vue, étant constitué d'un premier point de couleur qui est le point de couleur de la deuxième composante de couleur du premier desdits p pixels différents d'un groupe de p pixels du deuxième point de vue, ... d'un $p^{ème}$ point de couleur qui est le point de couleur de la première composante de couleur du $p^{ème}$ desdits p pixels différents dudit groupe de p pixels du deuxième point de vue, et ainsi de suite par permutation circulaire jusqu'au $N^{ième}$ pixel, qui correspond au $N^{ième}$ point de vue et au groupe de p pixels qui lui correspond.

L'invention concerne également une image affichée ou imprimée sur un support, caractérisée en ce qu'elle est affichée ou imprimée à partir d'une image autostéréoscopique telle que définie ci-dessus, sous forme de points ou de pixels d'affichage qui sont obtenus, en répartissant les p points de couleur de chaque pixel de ladite image autostéréoscopique entre les points de couleur de composante de couleur homologue de p points ou pixels d'affichage différents.

L'invention concerne également un support d'enregistrement tel que disque dur, disque DVD, bande magnétique présentant au moins une image autostéréoscopique enregistrée, qui est telle que définie ci-dessus.

L'invention concerne enfin un système de transmission notamment par câbles ou liaison hertzienne, essentiellement par satellite, comportant un dispositif d'émission pour émettre des images autostéréoscopiques telles que définies ci-dessus.

D'autres caractéristiques et avantages de l'invention apparaîtront mieux à la lecture de la description qui va suivre, donnée à titre d'exemple non limitatif, en liaison avec les dessins ci-annexés, dans lesquels :

- la Figure 1 illustre une première variante de l'invention appliquée au cas de la Figure 1a de la Demande PCT WO-A-94/26072 précitée, dont les Figures 2 et 3 illustrent des variantes correspondant respectivement à 5 et à 7 points de vue.
- la Figure 4 illustre une deuxième variante de l'invention, appliquée au cas de la Figure 1b de la Demande PCT précitée.
- la Figure 5 illustre une troisième variante de l'invention, appliquée au cas de la Figure 1a de la Demande PCT précitée, avec augmentation en deux temps de la définition de l'image.
- les Figures 6a et 6b illustrent une quatrième variante de l'invention, correspondant au cas des Figures 4A et 4B de la Demande EP n° 0 791 847 précitée.
- les Figures 7a et 7b illustrent une cinquième variante de l'invention, correspondant au cas des Figures 5A et 5B de la Demande EP n° 0 791 847.
- les Figures 8a et 8b illustrent une sixième variante de l'invention, correspondant au cas des Figures 6A et 6B de la Demande EP n° 0 791 847.
- et la Figure 9 illustre une augmentation de la définition par calcul des pixels intermédiaires, à partir d'une image de plus faible définition.

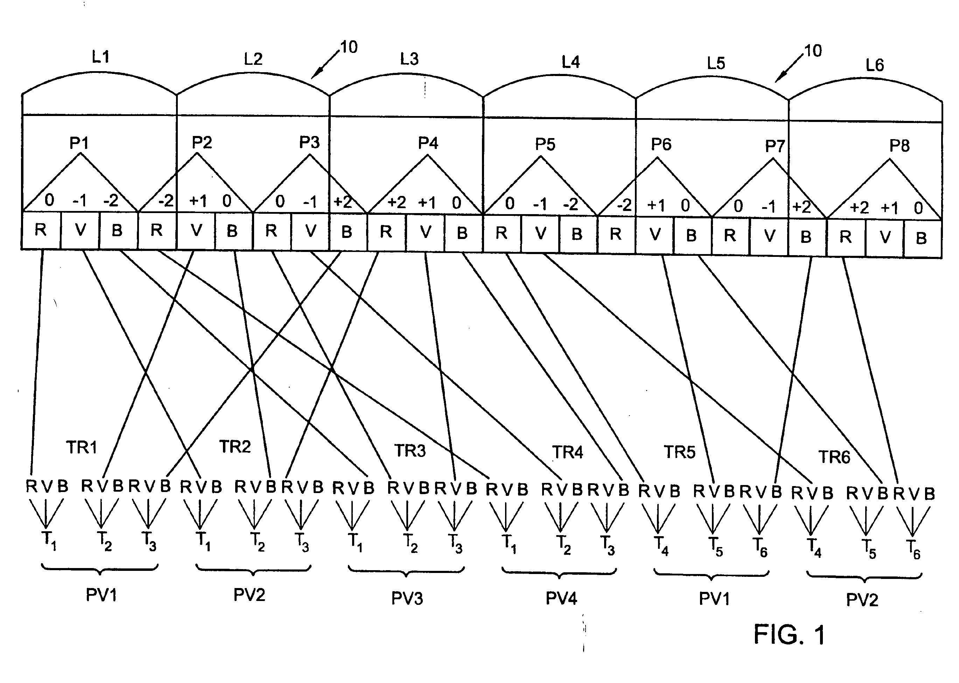

A la Figure 1, correspondant à N = 4 et à p = 3, l'image de définition supérieure présente trois fois plus de pixels dans la direction des lignes que l'image standard utilisée à la Figure la de la Demande PCT WO-A-94/26072. Pour les besoins de la description, elle est représentée sous la forme d'une image imbriquée comportant, dans la direction des lignes, des groupes de p = 3 pixels, à savoir les trois premiers pixels $T_1$, $T_2$, $T_3$ du premier point de vue $PV_1$, les trois premiers pixels $T_1$, $T_2$, $T_3$ du deuxième point de vue $PV_2$, les trois premiers pixels $T_1$, $T_2$, $T_3$ du troisième point de vue $PV_3$, les trois premiers pixels $T_1$, $T_2$, $T_3$ du quatrième point de vue $PV_4$, puis les trois pixels suivants $T_4$, $T_5$, $T_6$ de $PV_1$, les trois pixels suivants $T_4$, $T_5$, $T_6$ de $PV_2$ et ainsi de suite.

L'écran présente, dans la direction des lignes des pixels d'affichage P1, P2, P3 ... PM dont chacun est composé de p = 3 points de couleur correspondant aux composantes de couleur rouge R, verte V et bleue B. Le réseau lenticulaire 10 présente des lenticules $L_1$, $L_2$, $L_3$ ... dont le pas est égal à quatre fois le pas des points de couleur des pixels d'affichage, ce qui fait que le premier lenticule L1 est situé vis-à-vis des composantes R, V et B de P1 et de la composante R de P2, que le lenticule $L_2$ est situé en vis-à-vis des composantes V et B de P2 et des composantes R et V de P3 et ainsi de suite.

Au lieu de répartir les composantes R, V et B du premier pixel de l'image standard entre les points de couleur de composante homologue des pixels respectivement P1, P2 et P3, cette répartition s'effectue selon l'invention en ne conservant de chacun des pixels $T_1$, $T_2$ et $T_3$ du premier point de vue $PV_1$ qu'un de leur point de couleur, respectivement R, V et B. Il en va de même, avec permutation circulaire des composantes de couleur, pour les trois premiers pixels $T_1$, $T_2$ et $T_3$ des autres points de vue $PV_2$, $PV_3$ et $PV_4$.

Pour le point de vue $PV_1$, le point de couleur R de $T_1$ est affiché au point de couleur homologue R de P1, le point de couleur V de $T_2$ est affiché au point de couleur homologue V de P2, et le point de couleur B de $T_3$ est affiché au point de couleur homologue B de P3. Les points de couleur R de $T_1$, V de $T_2$ et B de $T_3$ constituent ainsi un triplet d'affichage $TR_1$, représentant le premier pixel de l'image à afficher.

Pour le point de vue $PV_2$, les points de couleur V de $T_1$, B de $T_2$, et R de $T_3$, qui constituent un triplet $TR_2$, représentant le deuxième pixel de l'image à afficher, sont respectivement affichés au point de couleur V de P1, B de P2 et R de P4. Pour le point de vue $PV_3$, les points de couleur B de $T_1$, R de $T_2$, et V de $T_3$, qui constituent un triplet $TR_3$, sont respectivement affichés au point de couleur B de P1, R de P3 et V de P4. Pour le point de vue $PV_4$, les points de couleur R de $T_1$, V de $T_2$ et B de $T_3$ qui constituent un triplet $TR_4$, sont respectivement affichés au point de couleur R de P2, V de P3 et B de P4, ce qui termine la séquence. Celle-ci se répète avec les points de couleur R de $T_4$, V de $T_5$ et B de $T_6$ qui constituent le triplet $TR_5$, pour le point de vue $PV_1$, qui sont affichés respectivement aux points de couleur R de P5, V de P6 et B de P7, et ainsi de suite. Cette répartition spatiale à partir d'une image présentant trois fois plus de pixels dans la direction des lignes permet d'augmenter la définition en luminance de l'image tout en conservant sa définition en chrominance. A la position nominale de vision, un observateur voit, soit les points de vue $PV_1$ et $PV_3$, soit les points de vue $PV_2$ et $PV_4$. Dans le premier cas, l'oeil gauche voit dans trois lenticules successifs les composantes R, V et B, alors que l'oeil droit y voit les composantes B, R et V. Dans le deuxième cas, l'oeil gauche voit dans trois lenticules successifs les composantes V, B et R, et l'oeil droit les composantes R, V et B. Il en va de même lorsque l'observateur est positionné de manière à voir les points de vue soit $PV_1$ et $PV_2$, soit $PV_2$ et $PV_3$, soit $PV_3$ et $PV_4$.

Cette complémentarité d'un oeil à l'autre et d'un lenticule à l'autre permet, comme indiqué ci-dessus, d'atténuer en vision stéréoscopique l'impact perceptif d'une basse résolution des couleurs.

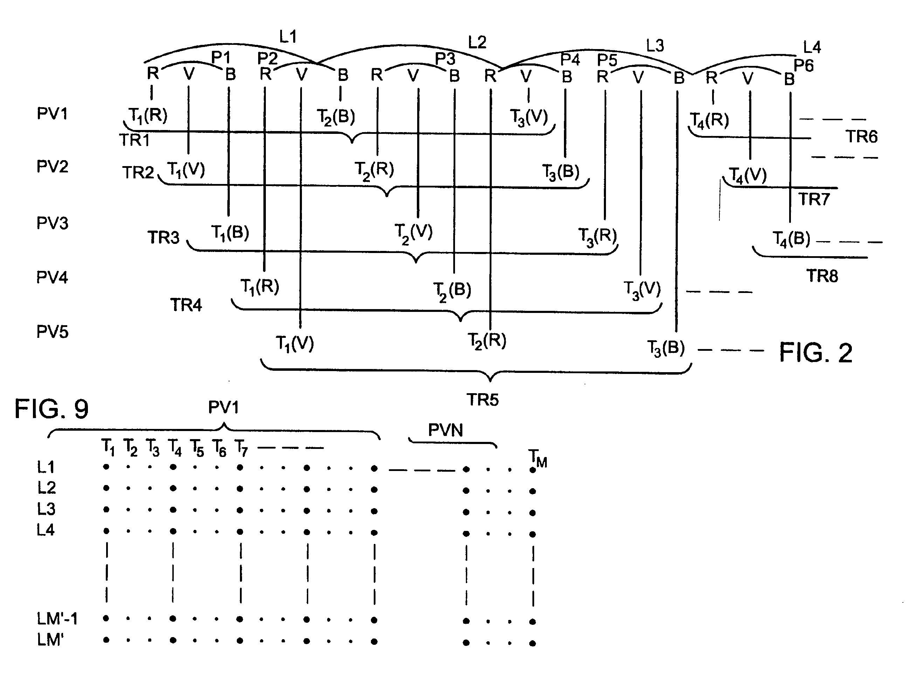

La Figure 2 correspond au cas de cinq points de vue (N = 5). Le pas de lenticules $L_1$, $L_2$, .... du réseau 10 est égal à N = 5 fois le pas des points de couleur des pixels d'affichage P1, P2, ... Pour le point de vue $PV_1$, le triplet $TR_1$, qui représente le premier pixel de l'image à afficher, est constitué de la composante rouge du premier pixel $T_1$ notée $T_1(R)$, de la composante bleue du deuxième pixel $T_2$ notée $T_2(B)$ et de la composante verte du troisième pixel $T_3$, notée $T_3(V)$. $T_1(R)$ est affichée au point de couleur rouge R du pixel d'affichage P1, $T_2(B)$ est affichée au point de couleur bleue de P2, et $T_3(V)$ est affichée au point de couleur verte de $P_4$. La règle d'affichage est représentée à la Figure 2 sous forme de tableau. Les triplets $TR_1$, $TR_2$, $TR_3$, $TR_4$ et $TR_5$ correspondent respectivement aux points de vue $PV_1$, $PV_2$ ... $PV_5$. Les triplets $TR_6$ ... $TR_{10}$ correspondent respectivement aux points de vue $PV_1$ ... $PV_5$ et ainsi de suite, modulo 5.

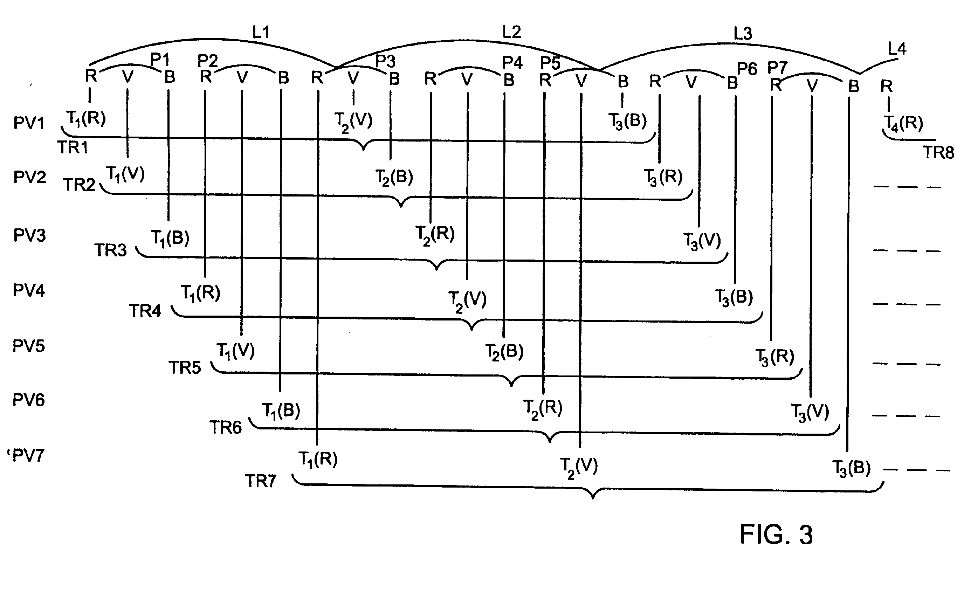

La Figure 3 correspond au cas de sept points de vue (N = 7). Le pas des lenticules $L_1$, $L_2$, ... de réseau 10 est cette fois égal à 7 fois le pas des points de couleur des pixels d'affichage P1, P2, ... La présentation sous forme de tableau est similaire à celle de la Figure 2. Les triplets $TR_1$ ... $TR_7$ correspondent respectivement aux points de vue $PV_1$ ... $PV_7$, et ainsi de suite modulo 7.

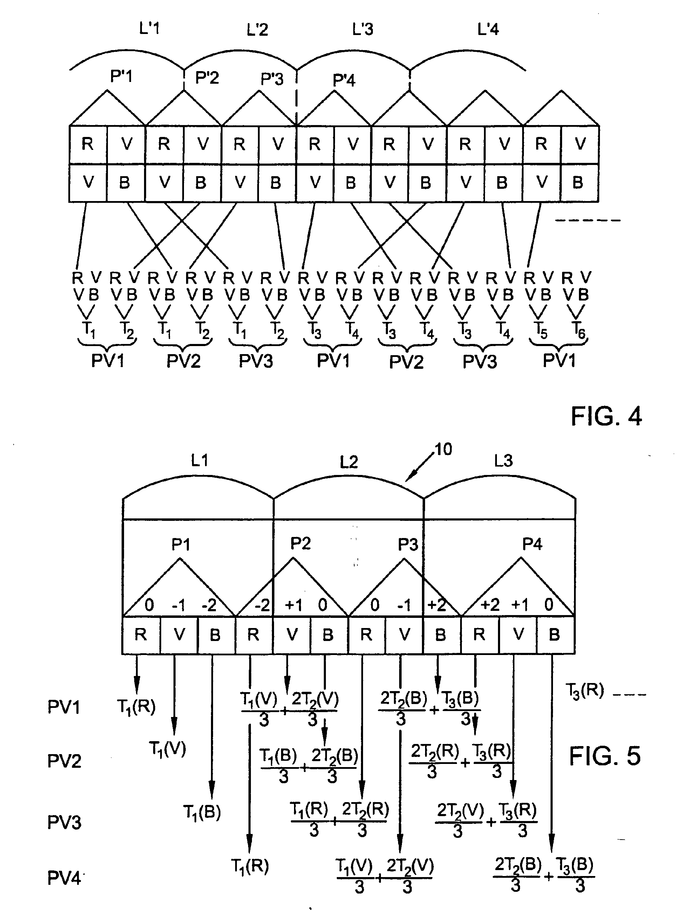

La Figure 4 représente le cas (p = 2) où les pixels de l'écran sont formés de deux composantes de couleur placées côte à côte dans la direction horizontale des lignes, à savoir une composante de couleur (R, V) constituée par la superposition verticale d'une composante rouge R et d'une composante verte V de demi-intensité, et une composante couleur (V, B) constituée par la superposition verticale d'une composante verte V de demi-intensité et d'une composante bleue B. Le réseau lenticulaire présente des lenticules L' dont le pas est égal à N=3 fois le pas des composantes de couleur. L'augmentation de définition est obtenue à partir d'une image qui présente deux fois plus de pixels dans la direction des lignes, que l'image standard utilisée à la Figure 1b de la Demande PCT WO-A-94/26072.

Pour le point de vue $PV_1$, le triplet d'affichage $TR_1$ est constitué de la composante de couleur (R, V) du pixel $T_1$ du point de vue $PV_1$ de l'image à afficher et de la composante de couleur (V, B) du pixel $T_2$ du point de vue $PV_1$ de l'image à afficher. Pour le point de vue $PV_2$, le triplet d'affichage $TR_2$ est constitué de la composante de couleur (V, B) du pixel $T_1$ du point de vue $PV_2$, et de la composante de couleur (R, V) du pixel $T_2$ du point de vue $PV_2$. La composante (R, V) du pixel $T_1$ de $PV_1$ est affichée en tant que composante (R, V) du pixel d'affichage P'1. La composante (V, B) du pixel $T_2$ de $PV_1$ est affichée en tant que composante (V, B) du pixel P'2. La composante (V, B) du pixel $T_1$ de $PV_2$ est affichée en tant que composante (V, B) du pixel P'1. La composante (R, V) du pixel $T_2$ de $PV_2$ est affichée en tant que composante (R, V) du pixel P'3 et ainsi de suite. En position de vision nominale, soit l'oeil gauche voit le point de vue $PV_1$, et l'oeil droit le point de vue $PV_2$, soit l'oeil gauche voit le point de vue $PV_2$, et l'oeil droit, le point de vue $PV_3$. Dans le premier cas, l'oeil gauche voit les composantes (R, V) et (V, B) dans des lenticules successifs, alors que l'oeil droit voit les composantes (V, B) et (R, V) dans ces mêmes lenticules. Dans le deuxième cas, l'oeil gauche voit les composantes (V, B) et (R, V) dans des lenticules successifs, alors que l'oeil droit voit les composantes (R, V) et (V, B) dans ces mêmes lenticules.

Il y a donc complémentarité de couleurs d'un oeil à l'autre et d'un lenticule à l'autre, mais cette fois-ci pour les trois composantes colorées rouge, verte et bleue, ce qui est favorable du point de vue perceptif.

La Figure 5 illustre le cas de la Figure 1, à ceci près que l'image à afficher est générée à partir d'une image autostéréoscopique dite intermédiaire dont la définition est, dans la direction des lignes deux fois, et non trois fois supérieure, à celle d'une image standard telle que celle utilisée à la Figure la de la Demande PCT WO-A-94/26072. Cette image intermédiaire peut être une image fournie par une caméra, ou bien encore une image provenant d'une banque de données vidéo, ou bien encore une image calculée par augmentation de définition à partir d'une image standard. L'image intermédiaire peut être également une image de synthèse.

Si on veut conserver l'information de l'image lors de l'affichage, il faut calculer pour chaque point de vue à partir de deux pixels $T_1$ et $T_2$, $T_3$ et $T_4$, etc. trois composantes de couleur à afficher.

Dans l'exemple représenté, ceci se fait par interpolation linéaire à partir de trois pixels successifs $T_1$, $T_2$, $T_3$ ; $T_3$, $T_4$, $T_5$, etc.

La composante $T_1(R)$ de $PV_1$ est affichée en tant que composante R de P1. La composante interpolée

$$\frac{T_1(V3)}{3} + \frac{2T_2(V)}{3}$$ est affichée en tant que composante V de P2.

La composante interpolée $\frac{2T_2(B)}{3} + \frac{T_3(B)}{3}$ est affichée en tant que composante bleue de P3, et ainsi de suite, comme indiqué sous forme de tableau à la Figure 5.

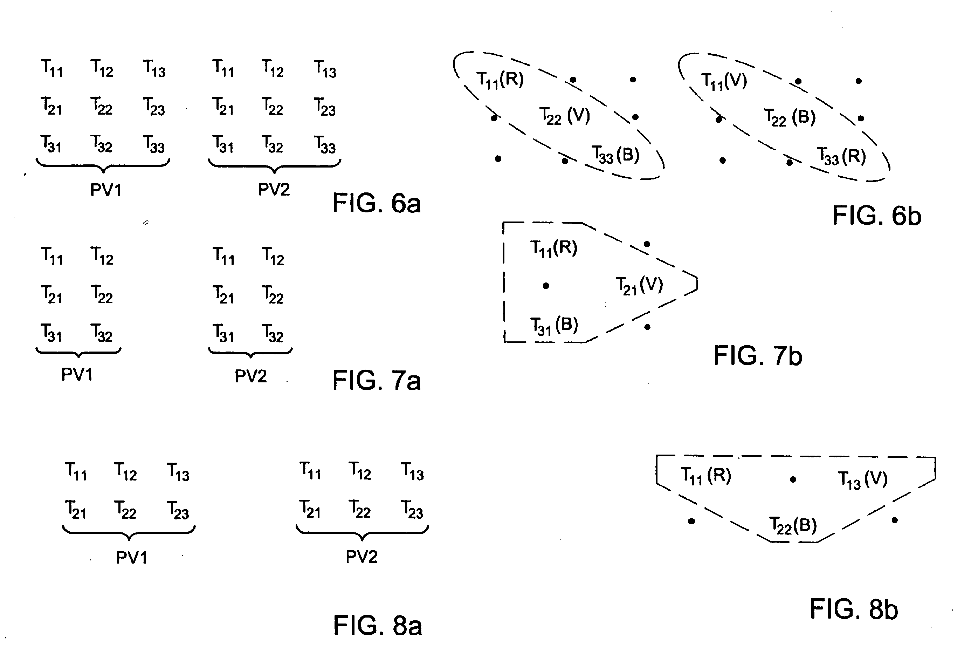

Le procédé, dans ses différentes variantes décrites ci-dessus, peut être appliqué directement à l'amélioration de la définition dans le sens des lignes du dispositif décrit dans la Demande EP-A-0 791 847. Dans le cadre de la Figure 4A, 4B, 6A et 6B de cette Demande, l'augmentation de définition qui est possible est égale à 3. Dans le cas des Figures 5A et 5B, elle n'est que de 2.

Pour augmenter la définition à la fois dans la direction des lignes et des colonnes, on part d'une image dont la définition est supérieure dans les deux directions.

Dans le cas des Figures 6a et 6b, la définition est augmentée d'un facteur 3 à la fois dans la direction des lignes et des colonnes. Ceci donne pour le premier pixel à afficher des points de vue $PV_1$, $PV_2$, ... une matrice de neuf pixels $T_{11}$ ... $T_{33}$. Pour $PV_1$, les composantes utiles sont la composante rouge $T_{11}(R)$ de $T_{11}$, la composante verte $T_{22}(V)$ de $T_{22}$ et la composante bleue $T_{33}$ (B) de $T_{33}$. Pour $PV_2$, les composantes utiles sont la composante verte $T_{11}(V)$ de $T_{11}$, la composante bleue $T_{22}$ (B) de $T_{22}$ et la composante rouge $T_{33}(R)$ de $T_{33}$ et ainsi de suite. Il suffit pour générer l'image à afficher de ne calculer que les coefficients utiles pour l'affichage.

Dans le cas des Figures 7a et 7b, la définition est augmentée d'un facteur 2 dans la direction des lignes et d'un facteur 3 dans la direction des colonnes. Pour les pixels à afficher du premier point de vue, on retient les composantes $T_{11}(R)$, $T_{21}(V)$ et $T_{31}(B)$. Pour les autres points de vue, les composantes à conserver se déduisent par permutation.

Dans le cas des Figures 8a et 8b, la définition est augmentée d'un facteur 3 dans la direction des lignes et d'un facteur 2 dans la direction des colonnes. Pour le premier pixel à afficher de chaque point de vue, on conserve les composantes $T_{11}(R)$, $T_{22}(B)$ et $T_{13}(V)$. Pour les autres points de vue, les composantes à conserver se déduisent par permutation.

La Figure 9 illustre l'augmentation de la définition d'un facteur 3 dans la direction des lignes, à partir d'une image dans le mode dit "N images" tel que décrit dans la Demande PCT WO-A-94/26071 du Demandeur, et dont les pixels notés $T_1$, $T_4$, $T_7$, etc ... $T_M$ sont représentés par convention par un point de plus grande taille. Pour chacun des pixels originaux $T_1$, $T_4$, $T_7$, ... $T_M$ de chaque point de vue ou image élémentaire, sont calculés, par exemple par interpolation, deux pixels intermédiaires $(T_2, T_3)$, $(T_5, T_6)$ etc... de manière à augmenter la définition.

Le procédé selon l'invention permet de générer, à partir d'images de définition vidéo standard, ou d'images qui présentent intrinsèquement une plus haute définition, qu'il s'agisse d'images filmées ou d'images de synthèse réalisées selon le procédé décrit dans la Demande PCT WO-A-97/01250 du Demandeur, des images autostéréoscopiques présentant une définition améliorée quant à la luminance et une définition plus basse quant à la chrominance.

Chaque pixel de l'image autostéréoscopique à afficher contient de l'information provenant de p points de l'espace différents. Une telle image autostéréoscopique à afficher peut être également générée directement à partir de l'image fournie par une caméra munie d'un capteur mono-CCD présentant des filtres colorés qui se succèdent horizontalement (RVBRVBRVB, ...) et un réseau lenticulaire divergent dont le pas apparent du réseau (c'est-à-dire le pas du réseau lenticulaire projeté par l'optique de reprise d'image sur le capteur mono-CCD) est égal à celui de N filtres colorés, ou un réseau lenticulaire convergent avec une permutation par symétrie de groupes de N filtres colorés pour conserver l'orthostéréoscopie. Par exemple, pour N = 4, on a, au pas de 12, la permutation suivante RBVRVRBVBVRB etc. On obtient de la sorte le décalage spatial souhaité pour chacun des points de couleur des pixels de l'image autostéréoscopique à afficher. Des caméras à réseau lenticulaire avec reprise d'image ont notamment été décrites dans les Demandes PCT WO-A-94/26071 et WO-A-94/25891 du Demandeur.

Une telle image peut être utilisée dans un système de transmission, ou bien être enregistrée sur un support d'enregistrement tel que disque dur, disque DVD, bande magnétique ou autre. Cette image peut être affichée sur un écran devant lequel est disposé un réseau lenticulaire. Elle peut également être imprimée sur un support papier et il sera possible de voir les images en relief à l'aide d'un réseau lenticulaire approprié, qui est solidaire ou non du support papier.

Dans la description ci-dessus, les termes "ligne" et "colonne" désignent respectivement les rangées horizontales et les rangées verticales de pixels vues par un observateur debout ou assis, indépendamment de la direction de balayage, horizontale ou verticale, de l'écran de visualisation. Par exemple, pour un écran dont les lignes de balayage sont disposées verticalement, on considérera ces "lignes de balayage" comme des colonnes.

## Revendications

1.  Procédé d'affichage autostéréoscopique d'une image à N points de vue sur un écran comportant des pixels d'affichage disposés selon des lignes et des colonnes, chaque pixel d'affichage présentant p>1 points de couleur, correspondant à une première, deuxième, ..., une $p^{ème}$ composante de couleur, procédé dans lequel les pixels d'une image autostéréoscopique primaire à afficher sont assignés auxdits pixels d'affichage en répartissant spatialement les p points de couleur de chaque pixel de ladite image autostéréoscopique primaire entre les points de couleur de composante de couleur homologue de p pixels d'affichage différents, **caractérisé en ce qu'**il met en oeuvre, à partir d'une image autostéréoscopique primaire de définition supérieure présentant au moins autant de pixels à p points de couleur que l'image à N points de vue présente de points de couleur, la génération d'une dite image autostéréoscopique à afficher dont les p points de couleur de chaque pixel d'affichage sont les points de couleur des composantes des couleurs homologues de p pixels différents de l'image autostéréoscopique primaire de définition supérieure.

2.  Procédé selon la revendication 1, **caractérisé en ce que** l'image autostéréoscopique primaire de définition supérieure présente, dans la direction des lignes, autant de pixels à p points de couleur que chaque ligne d'image présente de points de couleur.

3.  Procédé selon une des revendications 1 ou 2, **caractérisé en ce qu'**il comporte une étape de génération de l'image autostéréoscopique primaire de définition supérieure à partir d'une image autostéréoscopique de départ qui présente une définition plus faible, à l'aide d'un procédé d'augmentation de définition tel qu'un procédé d'interpolation, de vectorisation ou de recherche de contour.

4.  Procédé selon la revendication 3, **caractérisé en ce que** ladite définition plus faible est la définition de l'écran.

5.  Procédé selon une des revendications 3 ou 4, **caractérisé en ce que** l'image autostéréoscopique primaire de définition supérieure est générée en ne générant pour chaque pixel que le point de couleur utilisé lors de la génération de ladite image autostéréoscopique à afficher.

6.  Procédé selon une des revendications 3 à 5, **caractérisé en ce que** le procédé d'augmentation de définition est tel qu'il augmente la définition dans le sens des lignes.

7.  Procédé selon une des revendications 3 à 6, **caractérisé en ce que** le procédé d'augmentation de définition est tel qu'il augmente la définition dans le sens des colonnes.

8.  Procédé selon la revendication 6, **caractérisé en ce que** l'image autostéréoscopique primaire de définition supérieure est obtenue en générant à partir de l'image autostéréoscopique de départ, à l'aide dudit procédé d'augmentation de définition, une image autostéréoscopique intermédiaire présentant soit p, soit (p-1) plus de lignes et soit p, soit (p-1) plus de colonnes de pixels que l'écran, et **en ce que** ladite image autostéréoscopique primaire de définition supérieure est obtenue en sélectionnant dans l'image autostéréoscopique intermédiaire les pixels dont la position correspond à ladite répartition spatiale.

9.  Procédé selon la revendication 3, **caractérisé en ce que** ladite définition plus faible est la définition de l'écran, et **en ce qu'**il met en oeuvre, à l'aide dudit procédé d'augmentation de définition, la génération d'une image autostéréoscopique intermédiaire ayant une définition augmentée, puis de ladite image autostéréoscopique primaire de définition supérieure.

10. Procédé selon la revendication 9, **caractérisé en ce que** p=3 et **en ce que** ladite définition augmentée correspond au doublement du nombre des pixels dans la direction des lignes et/ou des colonnes.

11. Procédé selon une des revendications 9 ou 10, **caractérisé en ce que** l'image autostéréoscopique intermédiaire et/ou l'image autostéréoscopique primaire de définition supérieure sont générées en ne calculant pour chaque pixel que le ou les point(s) de couleur utile(s).

12. Procédé selon la revendication 1, **caractérisé en ce qu'**il comporte une étape de génération de l'image autostéréoscopique primaire de définition supérieure à partir d'une image autostéréoscopique de départ présentant soit p, soit (p-1) plus de lignes, et soit p, soit (p-1) plus de colonnes de pixels que l'écran, et **en ce que** l'image autostéréoscopique primaire de définition supérieure est obtenue en sélectionnant dans l'image autostéréoscopique de départ, les pixels dont la position correspond à ladite répartition spatiale.

13. Procédé selon l'une quelconque des revendications précédentes, **caractérisé en ce que** ladite image autostéréoscopique à afficher comporte, lorsqu'elle est ordonnée de manière à imbriquer les pixels des N points de vue qui la composent selon la topologie de son affichage, des groupes de N pixels dont chacun correspond à un point de vue différent, le premier pixel d'un groupe donné de N pixels, qui correspond à un premier point de vue, étant constitué d'un premier point de couleur qui est le point de couleur de la première composante de couleur du premier desdits p pixels différents d'un groupe de p pixels du premier point de vue, d'un deuxième point de couleur qui est le point de couleur de la deuxième composante de couleur du deuxième desdits pixels différents dudit groupe de p pixels du premier point de vue, d'un pᵉᵐᵉ point de couleur qui est le point de couleur de la pᵉᵐᵉ composante de couleur du pᵉᵐᵉ desdits pixels différents dudit groupe de p pixels du premier point de vue, le deuxième pixel dudit groupe donné de N pixels, qui correspond à un deuxième point de vue, étant constitué d'un premier point de couleur qui est le point de couleur de la deuxième composante de couleur du premier desdits p pixels différents d'un groupe de p pixels du deuxième point de vue, ... d'un pᵉᵐᵉ point de couleur qui est le point de couleur de la première composante de couleur du pᵉᵐᵉ desdits p pixels différents du groupe de p pixel du deuxième point de vue, et ainsi de suite par permutation circulaire jusqu'au Nième pixel dudit groupe donné qui correspond au Nième point de vue et au groupe de p pixels qui lui correspond.

14. Procédé selon la revendication 13, **caractérisé en ce que** lesdits groupes de N pixels sont disposés dans le sens des lignes.

15. Procédé selon l'une des revendications 13 ou 14, **caractérisé en ce que** lesdits p pixels différents sont contigus.

16. Procédé selon la revendication 15, **caractérisé en ce que** lesdits p pixels différents sont alignés dans la direction des lignes.

17. Procédé selon l'une des revendications précédentes, **caractérisé en ce que** les p points de couleur de chaque pixel d'affichage sont disposés côte à côte dans la direction des lignes ou des colonnes.

**Claims**

1. A method of autostereoscopically displaying an N-viewpoint image on a screen having display pixels disposed in rows and columns, each display pixel presenting p > 1 color points, corresponding to first, second, ..., and pᵗʰ color components, in which method the pixels of a primary autostereoscopic image to be displayed are allocated to said display pixels by distributing in space the p color points of each pixel of said primary autostereoscopic image amongst the color points of corresponding color components in p different display pixels, the method being **characterized in that**, starting from a "high definition" primary autostereoscopic image presenting at least as many pixels each having p color points as the N viewpoint image presents color points, a said autostereoscopic image to be displayed is generated in which the p color points of each display pixel are the color points of the corresponding color components of p different pixels in the high definition primary autostereoscopic image.

2. A method according to claim 1, **characterized in that** the high definition primary autostereoscopic image presents in the row direction as many pixels each having p color points as each image row presents color points.

3. A method according to claim 1 or 2, **characterized in that** it comprises a step of generating the high definition primary autostereoscopic image from a starting autostereoscopic image which presents lower definition by using a definition-increasing method, such as an interpolation method, a vectorization method, or an outline search method.

4. A method according to claim 3, **characterized in that** said lower definition is screen definition.

5. A method according to claim 3 or 4, **characterized in that** the high definition primary autostereoscopic image is generated by generating for each pixel only the color point that is used when generating said autostereoscopic image to be displayed.

6. A method according to any one of claims 3 to 5, **characterized in that** the definition-increasing method is such that it increases definition in the row direction.

7. A method according to any one of claims 3 to 6, **characterized in that** the definition-increasing method is such that it increases definition in the column direction.

8. A method according to claim 6, **characterized in that** the high definition primary autostereoscopic image is obtained from a starting autostereoscopic image by using said definition-increasing method to generate an intermediate autostereoscopic image presenting either p or p-1 times as many rows and p or p-1 times as many columns of pixels than the screen, and **in that** said high definition primary autostereoscopic image is obtained by selecting those pixels in the intermediate autostereoscopic image whose positions correspond to said distribution in space.

9. A method according to claim 3, **characterized in that** said lower definition is screen definition, and **in that** the method uses said definition-increasing method to generate an intermediate autostereoscopic image of increased definition, and then said primary autostereoscopic image of high definition.

10. A method according to claim 9, **characterized in that** p=3 and **in that** said increased definition corresponds to doubling the number of pixels in the row and/or column direction.

11. A method according to claim 9 or 10, **characterized in that** the intermediate autostereoscopic image and/or the high definition primary autostereoscopic image are generated by computing for each pixel only those color point(s) which are useful.

12. A method according to claim 1, **characterized in that** it comprises a step of generating the high definition primary autostereoscopic image from a starting autostereoscopic image having either p or p-1 times as many lines and either p or p-1 times as many columns of pixels than the screen, and **in that** the high definition primary autostereoscopic image is obtained by selecting pixels from the starting autostereoscopic image whose positions correspond to said distribution in space.

13. A method according to any preceding claim, **characterized in that** said autostereoscopic image to be displayed, when ordered so as to interleave the pixels of the N viewpoints making it up in accordance with its display topology, comprises groups of N pixels each of which corresponds to a different viewpoint, the first pixel of a given N pixel group corresponding to a first viewpoint being constituted by a first color point which is the color point of the first color component of the first of said p different pixels of a group of p pixels of the first viewpoint, a second color point which is the color point of the second color component of the second of said different pixels of said group of p pixels of the first viewpoint, ..., and a $p^{th}$ color point which is the color point of the $p^{th}$ color component of the $p^{th}$ of said different pixels of said group of p pixels of the viewpoint, the second pixel of said given group of N pixels which corresponds to a second viewpoint being constituted by a first color point which is the color point of the second color component of the first of said p different pixels of a group of p pixels of the second viewpoint, ..., and a $p^{th}$ color point which is the color point of the first color component of the $p^{th}$ of said p different pixels of the group of p pixels of the second viewpoint, ..., and so on by circular permutation to the $N^{th}$ pixel of said given group which corresponds to the $N^{tn}$ viewpoint and to the group of p pixels corresponding thereto.

14. A method according to claim 13, **characterized in that** said groups of N pixels are disposed in the row direction.

15. A method according to claim 13 or 14, **characterized in that** said p different pixels are contiguous.

16. A method according to claim 15, **characterized in that** said p different pixels are aligned in the row direction.

17. A method according to any preceding claim, **characterized in that** the p color points of each display pixel are disposed side by side in the row or the column direction.

## Patentansprüche

1. Verfahren zum stereoskopischen Anzeigen eines Bildes mit N Blickpunkten auf einem Bildschirm, der in Zeilen und Spalten angeordnete Anzeigepixel aufweist, wobei jedes Anzeigepixel p>1 Farbpunkte aufweist, die einer ersten, zweiten, ..., p-ten Farbkomponente entsprechen, wobei bei diesem Verfahren die Pixel eines anzuzeigenden autostereoskopischen Primärbildes den Anzeigepixeln zugeordnet werden, indem die p Farbpunkte jedes Pixels des autostereoskopischen Primärbildes auf die Farbpunkte einer homologen Farbkomponente von p verschiedenen Anzeigepixeln räumlich aufgeteilt werden, **dadurch gekennzeichnet, dass** es ausgehend von einem autostereoskopischen Primärbild mit einer hohen Auflösung (High Definition), das mindestens so viele Pixel mit p Farbpunkten aufweist, wie das Bild mit N Blickpunkten Farbpunkte aufweist, die Erzeugung eines solchen anzuzeigenden autostereoskopischen Bildes anwendet, bei dem die p Farbpunkte jedes Anzeigepixels die Farbpunkte der homologen Farbkomponenten von p verschiedenen Pixeln des autostereoskopischen Primärbildes mit einer hohen Auflösung sind.

2. Verfahren nach Anspruch 1, **dadurch gekennzeichnet, dass** das autostereoskopische Primärbild mit einer hohen Auflösung in der Zeilenrichtung so viele Pixel mit p Farbpunkten aufweist, wie jede Bildzeile Farbpunkte aufweist.

3.  Verfahren nach einem der Ansprüche 1 oder 2, **dadurch gekennzeichnet, dass** es einen Schritt des Erzeugens des autostereoskopischen Primärbildes mit einer hohen Auflösung ausgehend von einem autostereoskopischen Ausgangsbild mit einer niedrigeren Auflösung mithilfe eines Verfahrens zum Erhöhen der Auflösung wie etwa eines Interpolations-, Vektorisierungs- oder Kontursuchverfahrens umfasst.

4.  Verfahren nach Anspruch 3, **dadurch gekennzeichnet, dass** die niedrigere Auflösung die Auflösung des Bildschirms ist.

5.  Verfahren nach einem der Ansprüche 3 oder 4, **dadurch gekennzeichnet, dass** das autostereoskopische Primärbild mit einer hohen Auflösung erzeugt wird, indem für jedes Pixel nur der Farbpunkt erzeugt wird, der bei der Erzeugung des anzuzeigenden autostereoskopischen Bildes verwendet wird.

6.  Verfahren nach einem der Ansprüche 3 bis 5, **dadurch gekennzeichnet, dass** das Verfahren zum Erhöhen der Auflösung derart ist, dass es die Auflösung in der Richtung der Zeilen erhöht.

7.  Verfahren nach einem der Ansprüche 3 bis 6, **dadurch gekennzeichnet, dass** das Verfahren zum Erhöhen der Auflösung derart ist, dass es die Auflösung in der Richtung der Spalten erhöht.

8.  Verfahren nach Anspruch 6, **dadurch gekennzeichnet, dass** das autostereoskopische Primärbild mit einer hohen Auflösung erhalten wird, indem ausgehend von dem autostereoskopischen Ausgangsbild mithilfe des Verfahrens zum Erhöhen der Auflösung ein autostereoskopisches Zwischenstufenbild erzeugt wird, das entweder p oder (p-1) mehr Zeilen und entweder p oder (p-1) mehr Spalten von Pixeln als der Bildschirm aufweist, sowie **dadurch**, dass das autostereoskopische Primärbild mit einer hohen Auflösung erhalten wird, indem in dem autostereoskopischen Zwischenstufenbild diejenigen Pixel ausgewählt werden, deren Position der genannten räumlichen Aufteilung entspricht.

9.  Verfahren nach Anspruch 3, **dadurch gekennzeichnet, dass** die niedrigere Auflösung die Auflösung des Bildschirms ist, sowie **dadurch**, dass es mithilfe des Verfahrens zum Erhöhen der Auflösung die Erzeugung eines autostereoskopischen Zwischenstufenbildes mit einer höheren Auflösung und daraufhin des autostereoskopischen Primärbildes mit einer hohen Auflösung anwendet.

10. Verfahren nach Anspruch 9, **dadurch gekenn-**

**zeichnet, dass** p=3 ist, sowie **dadurch**, dass die höhere Auflösung einer Verdopplung der Anzahl von Pixeln in der Zeilen- und/oder Spaltenrichtung entspricht.

11. Verfahren nach einem der Ansprüche 9 oder 10, **dadurch gekennzeichnet, dass** das autostereoskopische Zwischenstufenbild und/oder das autostereoskopische Primärbild mit einer hohen Auflösung erzeugt werden, indem für jedes Pixel nur der nützliche Farbpunkt berechnet wird bzw. die nützlichen Farbpunkte berechnet werden.

12. Verfahren nach Anspruch 1, **dadurch gekennzeichnet, dass** es einen Schritt des Erzeugens des autostereoskopischen Primärbildes mit einer hohen Auflösung ausgehend von einem autostereoskopischen Ausgangsbild umfasst, das entweder p oder (p-1) mehr Zeilen und entweder p oder (p-1) mehr Spalten von Pixeln als der Bildschirm aufweist, sowie **dadurch**, dass das autostereoskopische Primärbild mit einer hohen Auflösung erhalten wird, indem in dem autostereoskopischen Ausgangsbild diejenigen Pixel ausgewählt werden, deren Position der genannten räumlichen Aufteilung entspricht.

13. Verfahren nach einem der vorherigen Ansprüche, **dadurch gekennzeichnet, dass** das anzuzeigende autostereoskopische Bild, wenn es so geordnet ist, dass die Pixel der N Blickpunkte, aus denen es gemäß der Topologie seiner Anzeige zusammengesetzt ist, einander überlappen, Gruppen von N Pixeln aufweist, von denen jedes einem anderen Blickpunkt entspricht, wobei das erste Pixel einer gegebenen Gruppe von N Pixeln, die einem ersten Blickpunkt entspricht, aus einem ersten Farbpunkt besteht, bei dem es sich um den Farbpunkt der ersten Farbkomponente des ersten der p verschiedenen Pixel einer Gruppe von p Pixeln des ersten Blickpunktes handelt, aus einem zweiten Farbpunkt, bei dem es sich um den Farbpunkt der zweiten Farbkomponente des zweiten der verschiedenen Pixel der Gruppe von p Pixeln des ersten Blickpunktes handelt, ..., aus einem p-ten Farbpunkt, bei dem es sich um den Farbpunkt der p-ten Farbkomponente des p-ten der verschiedenen Pixel der Gruppe von p Pixeln des ersten Blickpunktes handelt, und wobei das zweite Pixel der gegebenen Gruppe von N Pixeln, die einem zweiten Blickpunkt entspricht, aus einem ersten Farbpunkt besteht, bei dem es sich um den Farbpunkt der zweiten Farbkomponente des ersten der p verschiedenen Pixel einer Gruppe von p Pixeln des zweiten Blickpunktes handelt, ..., aus einem p-ten Farbpunkt, bei dem es sich um den Farbpunkt der ersten Farbkomponente des p-ten der p verschiedenen Pixel der Gruppe von p.Pixeln des zweiten Blickpunkt handelt, und so fort mittels Kreispermutation bis zum N-ten pixel der gegebenen Gruppe, die dem N-ten Blickpunkt und der diesem entsprechenden Gruppe von p Pixeln entspricht.

14. Verfahren nach Anspruch 13, **dadurch gekennzeichnet, dass** die Gruppen von N Pixeln in der Richtung der Zeilen angeordnet sind.

15. Verfahren nach einem der Ansprüche 13 oder 14, **dadurch gekennzeichnet, dass** die p verschiedenen Pixel aneinandergrenzen.

16. Verfahren nach Anspruch 15, **dadurch gekennzeichnet, dass** die p verschiedenen Pixel in der Zeilenrichtung angeordnet sind.

17. Verfahren nach einem der vorherigen Ansprüche, **dadurch gekennzeichnet, dass** die p Farbpunkte jedes Anzeigepixels nebeneinander in der Zeilen- oder Spaltenrichtung angeordnet sind.

FIG. 1

EP 1 106 016 B1

L1    L2    L3    L4

P1    P2    P3    P4    P5    P6

R  V  B  R  V  B  R  V  B  R  V  B  R  V  B  R  V  B

PV1    $T_1(R)$    $T_2(B)$    $T_3(V)$    $T_4(R)$
TR1                                                    TR6

PV2    TR2    $T_1(V)$    $T_2(R)$    $T_3(B)$    $T_4(V)$
                                                        TR7

PV3    TR3    $T_1(B)$    $T_2(V)$    $T_3(R)$    $T_4(B)$

TR8

PV4    TR4    $T_1(R)$    $T_2(B)$    $T_3(V)$

PV5    $T_1(V)$    $T_2(R)$    $T_3(B)$    FIG. 2

TR5

FIG. 9

PV1                          PVN

$T_1$ $T_2$ $T_3$ $T_4$ $T_5$ $T_6$ $T_7$    $T_M$

L1
L2
L3
L4

LM'-1
LM'

FIG. 3

L'1  L'2  L'3  L'4

P'1  P'2  P'3  P'4

| R | V | R | V | R | V | R | V | R | V | R | V | R | V |
| V | B | V | B | V | B | V | B | V | B | V | B | V | B |

R V  R V  R V  R V  R V  R V  R V  R V  R V  R V  R V  R V  R V  R V
V B  V B  V B  V B  V B  V B  V B  V B  V B  V B  V B  V B  V B  V B

$T_1$ $T_2$  $T_1$ $T_2$  $T_1$ $T_2$  $T_3$ $T_4$  $T_3$ $T_4$  $T_3$ $T_4$  $T_5$ $T_6$

PV1   PV2   PV3   PV1   PV2   PV3   PV1

**FIG. 4**

L1  L2  10  L3

P1  P2  P3  P4

| 0 | -1 | -2 | -2 | +1 | 0 | 0 | -1 | +2 | +2 | +1 | 0 |
| R | V | B | R | V | B | R | V | B | R | V | B |

PV1  $T_1(R)$  $\dfrac{T_1(V)}{3}+\dfrac{2T_2(V)}{3}$  $\dfrac{2T_2(B)}{3}+\dfrac{T_3(B)}{3}$  $T_3(R)$ ---

PV2  $T_1(V)$  $\dfrac{T_1(B)}{3}+\dfrac{2T_2(B)}{3}$  $\dfrac{2T_2(R)}{3}+\dfrac{T_3(R)}{3}$  **FIG. 5**

PV3  $T_1(B)$  $\dfrac{T_1(R)}{3}+\dfrac{2T_2(R)}{3}$  $\dfrac{2T_2(V)}{3}+\dfrac{T_3(R)}{3}$

PV4  $T_1(R)$  $\dfrac{T_1(V)}{3}+\dfrac{2T_2(V)}{3}$  $\dfrac{2T_2(B)}{3}+\dfrac{T_3(B)}{3}$

$T_{11}$   $T_{12}$   $T_{13}$     $T_{11}$   $T_{12}$   $T_{13}$

$T_{21}$   $T_{22}$   $T_{23}$     $T_{21}$   $T_{22}$   $T_{23}$

$T_{31}$   $T_{32}$   $T_{33}$     $T_{31}$   $T_{32}$   $T_{33}$

PV1      PV2

**FIG. 6a**

$T_{11}(R)$   •   •     $T_{11}(V)$   •   •

$T_{22}(V)$   •     $T_{22}(B)$   •

$T_{33}(B)$     $T_{33}(R)$

**FIG. 6b**

$T_{11}$   $T_{12}$     $T_{11}$   $T_{12}$

$T_{21}$   $T_{22}$     $T_{21}$   $T_{22}$

$T_{31}$   $T_{32}$     $T_{31}$   $T_{32}$

PV1      PV2

**FIG. 7a**

$T_{11}(R)$   •

•   $T_{21}(V)$

$T_{31}(B)$   •

**FIG. 7b**

$T_{11}$   $T_{12}$   $T_{13}$     $T_{11}$   $T_{12}$   $T_{13}$

$T_{21}$   $T_{22}$   $T_{23}$     $T_{21}$   $T_{22}$   $T_{23}$

PV1      PV2

**FIG. 8a**

$T_{11}(R)$   •   $T_{13}(V)$

•   $T_{22}(B)$   •

**FIG. 8b**

EP 1 106 016 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9426072 A
- EP 0791847 A
- WO A942607 A
- WO A9426072 A
- WO A9426071 A
- WO A9701250 A
- WO 9425891 A